# EUROPEAN PATENT SPECIFICATION

(11) **EP 1 346 645 B1**
(45) Date of publication and mention of the grant of the patent: **26.04.2006**
(21) Application number: 02076159.9
(22) Date of filing: 20.03.2002
(51) Int. Cl.: A23G 1/20, A23G 1/21

(54) **Apparatus for making chocolate covering layers**
Vorrichtung zur Herstellung von Deckschichten aus Schokolade
Dispositif pour la production de couches de couverture en chocolat

(43) Date of publication of application: 24.09.2003
(73) Proprietor: AASTED-MIKROVERK APS, 3520 Farum (DK)
(72) Inventor: Refer, Jacob Christian, 3000 Helsingor (DK)
(74) Representative: Heiden, Finn

(56) References cited:
- EP-A- 0 914 776
- EP-A- 0 923 876
- EP-A- 0 948 899
- WO-A-95/32633
- WO-A-99/40800
- US-B1- 6 220 151

## Description

The present invention concerns an apparatus for covering pre-made edible articles in moulds with a covering layer of chocolate-like mass, in particular chocolate mass.

Generally, chocolate-like masses are suspensions of non-fat particles such as sugar, milk powders and cocoa solids mixed up with a liquid fat constituent. Often the fat phase comprises genuine cocoa butter of until around 30%, but may comprise substitutes as well. Such substitutes can be in the form of other types of fat-containing oils. Chocolate types where the cocoa butter has been replaced wholly or partly by other fats are often named commercially as compound chocolate, in which the cocoa butter has been replaced by palm-kernel oil. Mass made of 100% fat in the form of cocoa butter or the like as compound is also possible.

However, for the chocolate-like masses according to the present invention it is decisive, that whether the fat phase constitutes of genuine cocoa butter or substitutes therefore, that the fat phase is capable of crystallizing into stable crystal types, such as the β-crystals developing in genuine cocoa butter when the mass solidifies.

The chocolate-like mass is brought to a tempered, liquid state and then deposited on top of the pre-made articles in the moulds for covering the upper open surfaces of the articles. Optionally, the moulds may then be shaken for obtaining a more even distribution of the chocolate mass as a layer on top of the articles in the moulds.

By the tempering process the mass is brought to around 40-50°C, where after it is being cooled to around 25-34°C so that crystallisation is initiated. Then the mass is reheated around 0,5-2,0°C for re-melting most of the in-stable crystals in the mass, however preserving a content of stable β-crystals which melts at a higher temperature than the in-stable crystals. The stable crystals are preserved in the mass ready for depositing in an amount of typically 0,01 % - 5%, preferably in an amount of 0, 1 % - 2%.

The pre-made articles may for example be made by depositing tempered chocolate-like mass in empty moulds, optionally shaking the moulds, and then immersing cold plungers into the mass for making shells with predetermined and even thickness. After the shells are solidified, the are filled with a centre mass of a creamy or liquid food material, which differs from that of the shell material. The centre mass could be an alcohol containing mass, a sugar containing mass or a creamy fondant mass, simply any of the centre masses known to the chocolate industry, as long as it is capable of carrying the subsequently deposited chocolate covering layer.

EP 0 945 069 A2 discloses a proposal for making articles in the aforementioned manner, by which shells are made by the use of immersing plungers into the chocolate mass and having inclined upper shell rim surfaces, no part of which extends above the upper surface of the moulds. The geometry of the upper shell rim secures a optimal adhesion with the subsequently applied covering layer.

The shells are then filled with centre mass, on top of which are deposited chocolate mass, the excess of which is scraped off while still being kind of liquid. The scrapers or knifes moves along the upper surface of the moulds.

Thereby is obtained a planar or level surface of the covering mass, which constitutes the bottom surfaces of the chocolate articles. When the articles have solidified properly and have been released from the moulds they are reversed and placed on their bottoms in a box or a wrapping foil.

However, by using such scraping technique for the covering it is only possible to use the same type of chocolate mass for all the coverings made on the articles in the production. If for example two types of chocolate such as milk chocolate and dark chocolate were to be used simultaneously for different articles in the production line, the scraping process would simply mix up and contaminate the articles with excess chocolate of different type, which is unacceptable for the consumer.

DE 198 53 847 A1 describes a further technique with the above mentioned disadvantages, by which excess mass at the upper rims of chocolate shells is scraped of by means of knifes moving along the upper surfaces of the mould plates.

In a production plant every mould plate may typically constitute 10-100 mould cavities for articles, and for several reasons it is desirable to make some of the articles of one chocolate type, other articles in the same mould plate of another chocolate type and again further articles of a third chocolate type, etc. This is not possible by the known production techniques.

Theoretically, different chocolate types could be deposited into different mould cavities in the same mould plate according to a desirable pattern, which for example is transferred directly in a packaging box. After depositing the mould plate has to be shaken sufficiently for the covering chocolate layer to distribute satisfactorily over pre-made articles in the moulds. However practice has shown, that the bottom coverings of the articles made by this manner are not fully satisfactory, as they are often buckly and uneven with varying thickness, which can cause migration of the centre filling out through the bottom layer of the articles later on during storage. Neither is it possible to deposit the covering layers in the exact same amount from article to article.

In practice it has thus been necessary to deposit an excess amount of mass and scrape of the excess mass of the coverings by moving scrapers or knives along the upper surfaces of the mould plates. Thereby, contamination of the different chocolate types in the moulds of the mould plates is unavoidable and unacceptable.

By the solution according to claim 1 of the present invention plungers having a pressing surface onto which no lubricant is applied are immersed into contact with corresponding covering layers of liquid or flowable, non-solidified chocolate mass thereby being pressed into shape, and the temperature of the pressing surfaces is kept below the solidification temperature of the chocolate mass during the pressing, whereafter the plungers are retracted from the chocolate coverings.

Hereby is obtained, that a predetermined surface of a covering layer can be obtained without the use of any intermediary lubricant applied to the plunger surface. When being pressed by the surface of the plunger the ready made surface of the covering layer is simply an identical print of the geometry of the plunger surface. Deleterious effects to the chocolate caused by remains of lubricant, whether it be water, gelatine or any other possible composition is completely avoided. Furthermore is contamination of the plunger and the edible chocolate article with lubricant remains avoided. Remains having for instance a water content is certainly suspected to give rise to bacteria growth such as in the dangerous salmonella form.

The chocolate rapidly solidifies under crystallisation from its surface in contact with the pressing surface of the plunger and inwardly through the chocolate layer. By being forced into contact with the colder pressing surface of the plunger, the tempered chocolate instantly solidifies and contracts slightly at its part in contact with the pressing surface whereby it releases the pressing surface. Decisive is here, that the tempered chocolate contains stable crystals, which makes the chocolate mass contract just slightly when it solidifies in contact with a continuously cooled surface. A solidified outer "skin" is created on the chocolate in contact with the pressing surface when the chocolate solidifies and contracts slightly, and this is sufficient for the chocolate to release from the plunger surface where after the plunger can be retracted. The remaining part of the chocolate layer then doesn't need to be solidified when the plunger is retracted from its contact with the chocolate. The outer solidified "skin" of the chocolate layer secures a geometrical stable layer though heat remains inside the covering layer when the plunger is retracted from contact.

So necessary for the plunger to be capable of being retracted from the chocolate layer without sticking is solely, that the outer part or surface "skin" of the chocolate layer has solidified and thereby contracted slightly.

A further great advantage is, that any subsequent scraping of the covering layers is unnecessary. Thereby it is possible to mould different chocolate types in the different mould cavities in the same mould plate without having the different chocolate types intermixed. The chosen pattern of the different articles with the different chocolate types in the same mould plate can then be maintained and transferred directly over into a selling box when the articles are lifted simultaneously up and free from the mould plates. In fact the content of one mould plate can be transferred directly over into one selling box maintaining the mutual orientation between the articles of different chocolate in the mould plate. Thereby steps of selection of articles of different chocolate types from different production lines and subsequent mutual orientation thereof in boxes is totally avoided.

Build up of particles of chocolate mass at the plunger surface with time is avoided when the plunger surfaces are continuously kept dry from any lubricant or moisture during the continuous pressing of further covering layers.

It is ensured, that no moisture is created on the pressing surfaces of the plungers when the air surrounding at least the pressing surfaces is continuously kept dry in every position of the plungers.

When the temperature of the pre-made articles is kept below the solidification temperature of the chocolate mass layers, the covering layers will solidify from the part in contact with the article and into the covering layer simultaneously with the solidification from the surface of the covering layer in contact with the pressing surface of the plunger and into the covering layer.

When the plungers are moving independently of each other when in contact with the individual covering chocolate layers, there is compensated for deviations in the volumes of the covering layers deposited on top of the different articles in the same mould plate.

An even basis and surface is created when the top of a centre fillings in the pre-made articles are pressed by the surfaces of plungers before the articles are covered by the chocolate layers. Then it is avoided, that a buckly or uneven top-layer of the centre filling is given rise to varying thickness in the individual covering layer. When the premature pressing of the top of the essentially fat-containing centre filling has secured an even or planar surface determined as a geometrical copy of the interacting surface of the pressing plunger, then the subsequent pressing of the covering layer creates a finished covering layer of a geometrically predetermined thickness, which typically can be the same all over the covering surface of the article.

The invention is explained further below by reference to preferred embodiments as well as the drawing, in which
fig. 1 is a schematical perspective view of the part of a production plant according to the invention,
fig. 2 is a schematical, partial sectional view of a single centre filling depositing nozzle and a single mould cavity of a moulding plate comprising several cavities,
fig. 3 is a schematical sectional view of a single chocolate filling depositing nozzle_{;}
fig. 4 is a schematically depicted mould plate,
fig. 5 is a schematical, perspective view of a complete plunger section,
fig. 6 is a sectional view of the plunger section,
fig. 7 is a schematical view of a single plunger to be immersed into the chocolate covering layer deposited on top of a pre-made edible article,
fig. 8 is the same as in fig. 7, the plunger now being close to contact the chocolate covering layer,
fig. 9 is the same as in figures 8 and 9, the plunger now being pressed into a lowermost position where the covering layer is completely moulded by the geometry of the pressing surface of the plunger, whereafter the plunger is retracted,
fig. 10 is a further embodiment where the previous making of the centre filling in the ready made shell is to be influenced by a plunger as well, which is depicted in the same manner as in figure 7 before the centre filling plunger is in contact with the centre mass, and
fig. 11 is the same as in figure 10, the plunger now being in its lowermost position where the centre filling mass is completely moulded by the geometry of the pressing surface of the centre filling plunger.

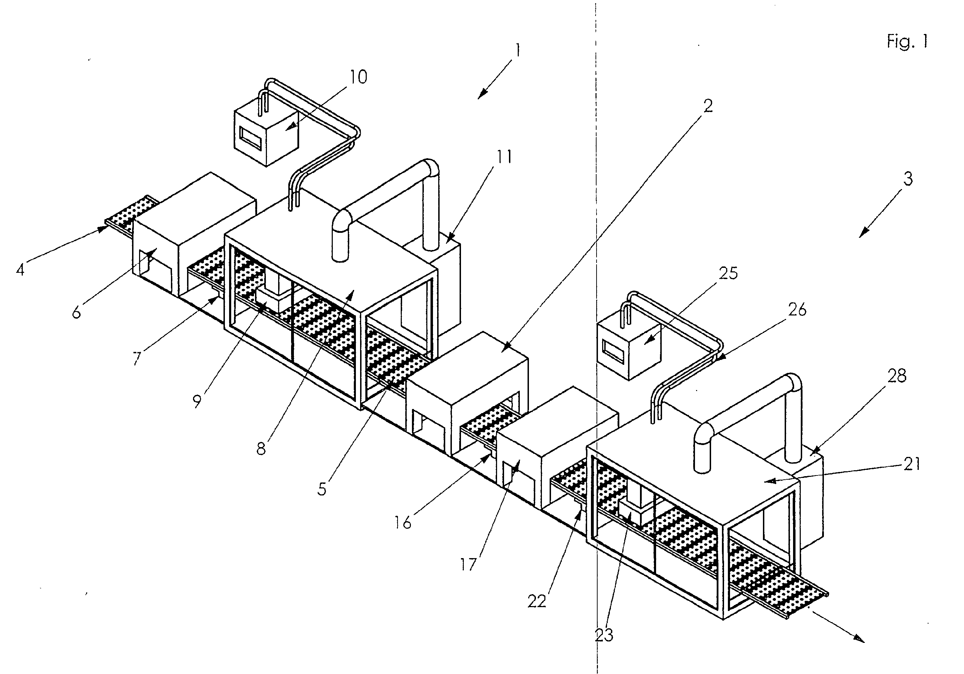

The part of a chocolate article manufacturing plant shown in figure 1 comprises a shell moulding section 1 and centre filling section 2 and a bottom covering section 3. A continuously moving conveyer 4 extends through the stations 1, 2 and 3 and carries a great number of adjacent mould plates 5. For clarity is only disclosed the part of the conveyor 4 running through the depicted sections 1, 2 and 3. Subsequently to the bottom covering section 3 normally follows a cooling tunnel and a wrapping section. The bottom covering section 3 constitutes the core of the present invention.

Tne schematically disclosed housing 6 comprises a depositor with a number of nozzles, which deposit chocolate into the individual mould cavities of each mould plate 5. Each individual mould plate 5 is then carried on by the conveyor 4 and passes over a shaking table 7, which distributes the deposited chocolate more evenly within the individual mould cavities.

The mould plates 5 then enters the shell moulding housing 8, within which the deposited chocolate are moulded into shells. By the disclosed moulding process a cooled plunger pressing plate 9 is lowered into engagement with each mould plate 5 passing through, to such an extent, that individual plungers forms the chocolate in the mould cavities into fully moulded shells. The plungers may be cooled by a cooling liquid circulation unit 10 and the air in the moulding housing 8 may be controlled by a circulation unit 11. However as the depositing and shell making sections are not part of the inventive idea, they may be of any kind. When the shells have been moulded they may be carried through a cooling tunnel before they enter the centre filling section 2, so because the cooling tunnel is optional it is not disclosed.

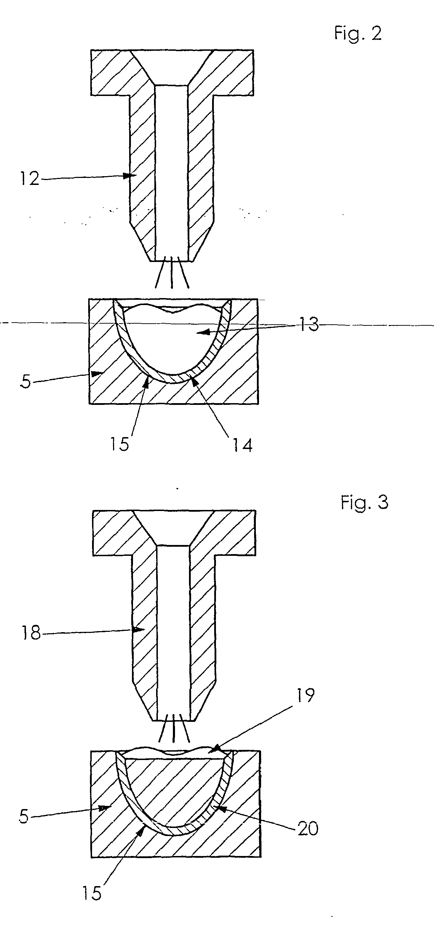

In the centre filling section 2, several nozzles 12 simultaneously deposit the desired centre mass 13 into underlying pre-made shells 14 in the moulds 15 of the same mould plate 5. In partial section is in figure 2 disclosed a single nozzle 12 and an underlying shell 14 in a mould cavity 15. The centre mass could be an alcohol containing mass, a sugar containing mass or a creamy or fondant mass, simply any of the centre masses known to the chocolate industry, as long as it is capable of carrying the subsequently deposited chocolate covering layer.

The centre filling mass 13 is advantageously distributed more evenly in the shell 14 when the mould plates 5 passes over a shaking table 16 as shown in figure 1. Optionally the shells with centre filling may subsequently be cooled further, for example by the mould plates passing through a cooling tunnel. Comprising the shells 14 with the inside centre fillings 13, the edible articles 20 are now pre-made and ready for obtaining a bottom covering layer according to the inventive idea.

It should be emphasized, that the inventive idea is especially advantageous however not limited to pre-made edible articles comprising a chocolate shell with a centre mass and which ready made with the bottom covering becomes a "praline". Any kind of pre-made edible article may be subject to the inventive idea regardless of the edible material and composition and regardless of the geometry thereof. The pre-made article could for example be a biscuit, a wafer or generally a bakery article or a solid chocolate article without any centre filling, and the shape of the article could be round, flat, slab or bar formed.

In the schematically disclosed housing 17 is arranged a depositor comprising several nozzles 18, each of which deposit a predetermined volume of tempered chocolate as a covering layer on top of underlying pre-made articles 20 in the cavities 15 of the mould plate 5. A single nozzle 18 and an underlying pre-made article 20 is disclosed in figure 3.

The temperature of the mould plates 5 and consequently of the pre-made articles 20 are preferably kept around 10-20°C during the subsequent pressing of the bottom covering layer.

However, before depositing and pressing the bottom covering layer, the upper rims of the shell edges may be reheated so that an optimal connection with the subsequently pressed bottom covering layer is obtained.

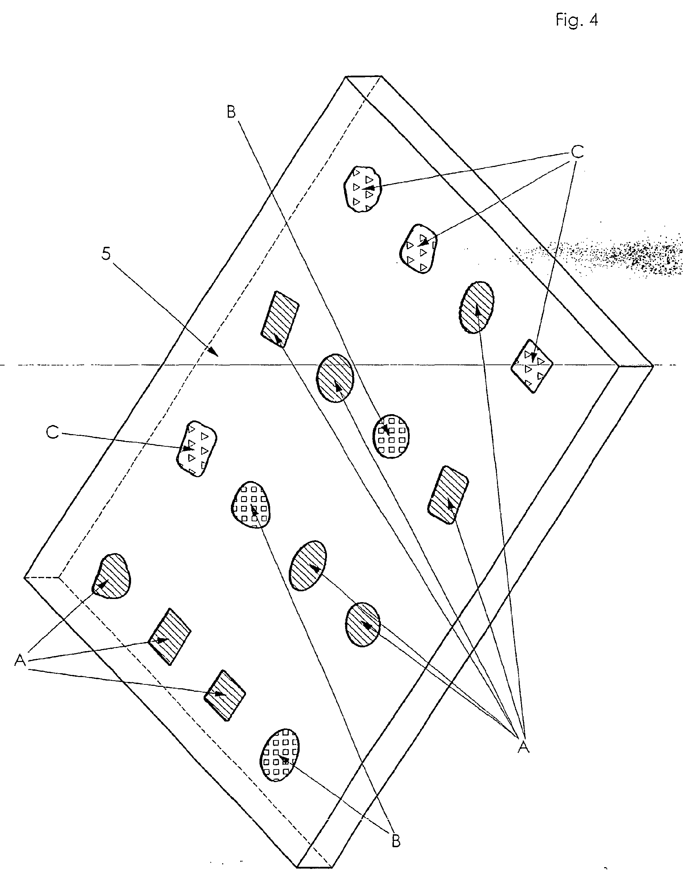

The same type of chocolate may be deposited through all of the nozzles and upon all of the pre-made articles in the same mould plate. However, different types of chocolate may also be deposited optionally through different nozzles 18, so that for example milk chocolate A is deposited on top of some of the articles, dark chocolate B is deposited on top of other articles and yet a further chocolate type C such as having a yet different taste or colour on top of yet further pre-made articles all in moulds of the same mould plate 5 as depicted in figure 4. Any mixture or intermixing of the different chocolate types with each other is thereby avoided by the subsequent pressing of the chocolate layers with the pressing plungers. After the pressing the articles are ready for packaging and any scraping of at the upper surface of the moulds are superfluous. Before entering the housing 21 in which the bottom covering mass 19 is pressed, the mould plates 5 may pass over a further shaking table 22, which improves the distribution of the deposited chocolate covering layer over the top surface of the pre-made article 20.

The chocolate masses deposited as the covering layers has to undergo a tempering process before it can be deposited. During the tempering process the chocolate mass is heated to around 40-50°C. whereafter it is being cooled down to around 25-34°C, so that crystallisation is initiated. Then the mass is reheated around 0,5-2,0°C for re-melting most of and preferably all the in-stable crystals in the mass, however preserving a content of stable β-crystals, which melts at a higher temperature than the in-stable crystals. The stable crystals are preserved in the mass ready for depositing in an amount of typically 0,01% - 5%, preferably in an amount of 0,1 % - 2%.

The tempering process is today well-known and it is known how to regulate the temperatures of the different steps exactly in accordance with the actual chocolate mass being tempered, so that the end result is a mass constituting an amount of stable crystal, typically around 0,1% - 2% and being essentially free from in-stable crystals.

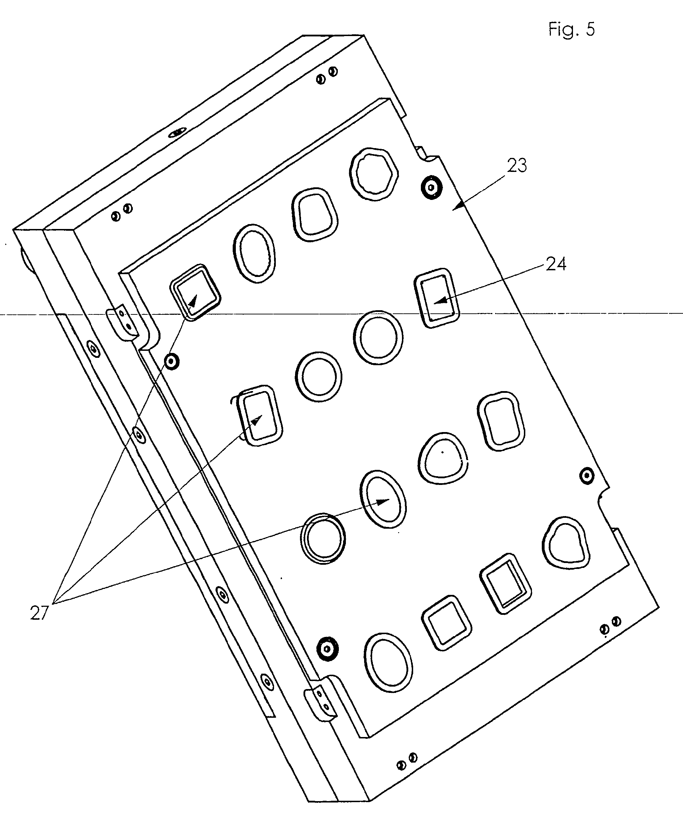

In figure 5 is schematically disclosed a holding and cooling device 23, in which are arranged plungers 24 in a pattern corresponding to that of the arrangement of the mould cavities 15 in the mould plates 5. As disclosed in figure 1, cooling liquid is circulated via hoses 26 by means of a cooling liquid controlling device 25 through the holding and cooling device 23. The temperature of the cooling liquid is kept constant and thereby the temperature of the pressing surfaces 27 of the plungers 24 are kept below the solidification point of the covering chocolate during the pressing thereof. The temperature of the cooling liquid is typically kept around 1-5°C colder than the desired temperature kept of the pressing surfaces 27.

The solidification temperature of the particular chocolate mass being used may de obtained from the chocolate supplier or by a premature test where the tempered chocolate is deposited on a surface having a known temperature. However, a surface temperature below 20°C is to the safe side below the solidification temperature of the today's most used chocolate types.

The plungers are made of metal such as steel, cobber or aluminium, and the pressing surfaces are highly polished.

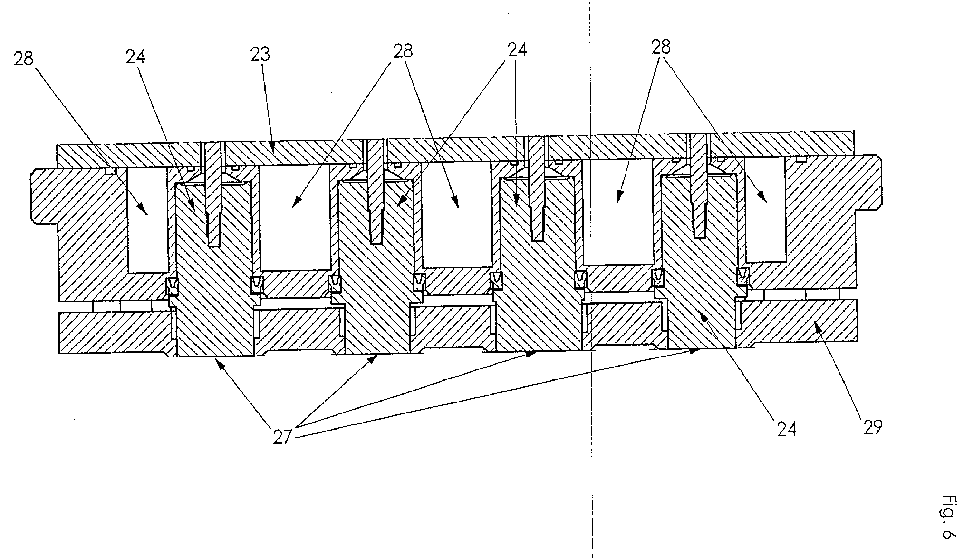

As depicted in figure 6 the plunger holding device 23 comprises cooling channels 28 through which the temperature controlling cooling medium circulates. The device 23 furthermore comprises a closure plate 29, which by the counteraction of a spring pressure force is movable in relation to the plungers 24 and which is adapted to en-gage with the upper surface 30 of the mould plates 5 at least in areas surrounding the mould cavities 15.

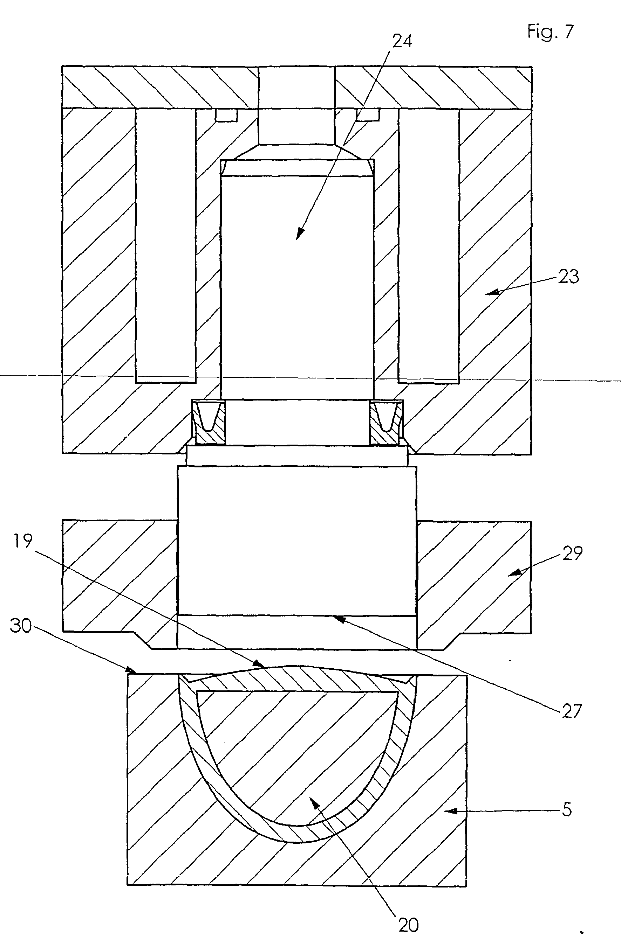

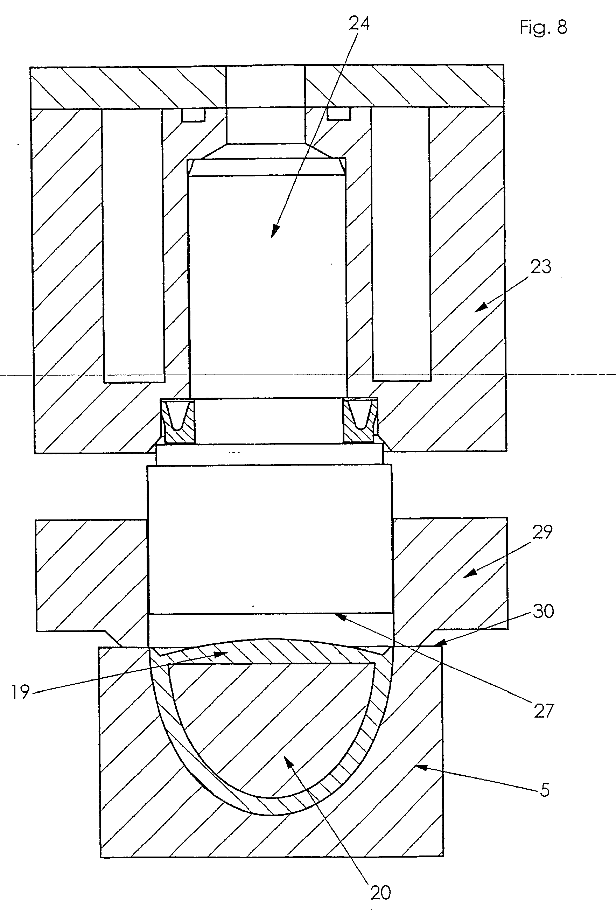

A schematic section of the plunger holding device 23 and of the underlying mould plate 5 is disclosed in figure 7 and the interacting function between the holding device 23 and the mould plates 5 is disclosed in relation thereto. The up and down movement of the holding device 23 is controlled by means of known simple mechanical means of columns and travelling tool holders or sledges. In figure 7 the pressing surface 27 and holding device 23 are close to the mould plate 5. In figure 8 the closure plate 29 has now come to contact with the upper surface 30 of the mould plate 5 whereby the mould cavity for pressing the bottom layer is completely closed of and defined.

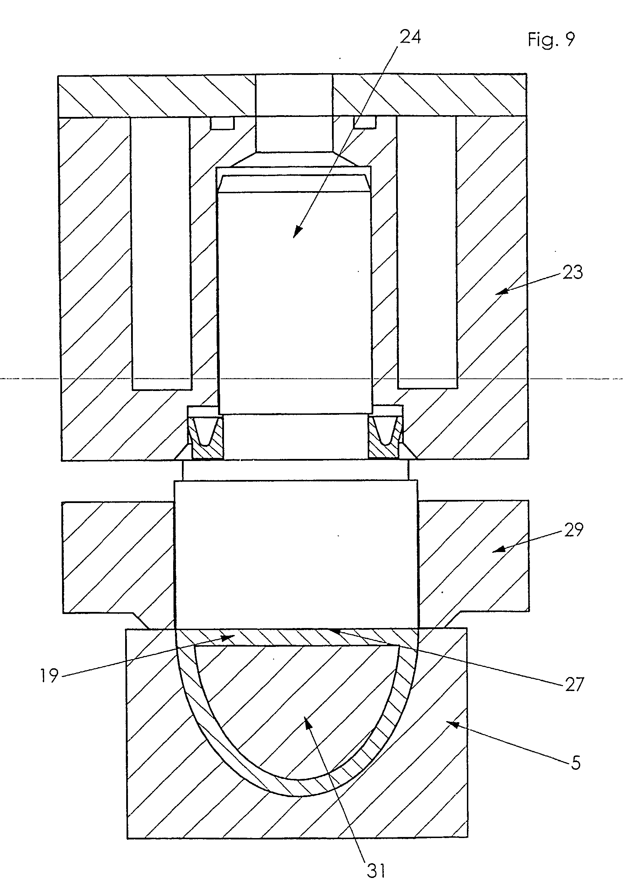

In figure 9 the holding device 23 has been moved down to its lowermost position in which the covering layer 19 is now fully pressed into shape by the contact with the pressing surface 27, so that the article 31 is now complete.

The tempered chocolate covering mass solidifies at the completely dry pressing surface 27 free of any lubricant and being kept at temperatures below that of the solidification temperature of the particular chocolate 19. The chocolate solidifies and contracts slightly, whereby it releases from adhesion with the pressing surface 27 after contact therewith.

When being pressed by the surface 27 of the plunger the ready made surface of the covering layer is simply an identical print of the geometry of the plunger surface.
The chocolate rapidly solidifies under crystallisation from its surface in contact with the pressing surface 27 of the plunger and inwardly through the chocolate layer 19. By being forced into contact with the colder pressing surface 27 of the plunger 24, the tempered chocolate instantly solidifies and contracts slightly at its part in contact with the pressing surface whereby it releases the pressing surface.

Decisive is here, that the tempered chocolate contains stable crystals, which makes the chocolate mass contract just slightly when it solidifies in contact with a continuously cooled surface. A solidified outer "skin" is created on the chocolate in contact with the pressing surface 27 when the chocolate solidifies and contracts slightly, and this is sufficient for the chocolate to release from the plunger surface. The remaining part of the chocolate layer then doesn't need to be solidified yet when the plunger is retracted from its contact with the chocolate. The outer solidified "skin" of the chocolate layer secures a geometrical stable layer though heat remains inside the covering layer when the plunger is retracted from contact.

The contraction is caused by the solidification of the mass into stable crystals and could be as small as 0,1%-0,5% in volume for a typical milk chocolate and up until around 2% for a typical dark chocolate which is known to set harder than a milk chocolate. However, such slight contraction in volume is sufficient to secure, that the solidified chocolate layer in contact with the dry pressing surface "springs off" the pressing surface with no further adhesion thereto. As the pressing surface is free of any lubricant or moisture there is no risk that a "suction" or "gluing" effect between the solidifying chocolate surface and the pressing surface is created. Any contamination of the chocolate with remains of lubricant or moisture is avoided as well.

The solidification temperature of the particular tempered chocolate mass varies and is dependent of the chocolate type and recipe, is however between 20 and 30°C for the majority of today's used chocolate types. When keeping the temperature of the pressing surface at 20°C the contact period between the chocolate and the pressing surface is around 10 seconds before chocolate "skin" in contact with the pressing surface has solidified and the plunger is retracted.

A clear relation between pressing period and temperature of the pressing surface is present. The lower the temperature the shorter the pressing period obtained. When keeping a temperature of +10°C of the pressing surface the pressing period was shortened to around 5 seconds, and when lowering the pressing surface temperature to between -5°C and +5°C the pressing period was shortened to between 1 and 3 seconds. When the pressing temperature was kept as low as between -25°C and -5°C the pressing period could be as low as 0,5 - 2 seconds. The observations was performed with covering layers of thickness between 1 and 4 mm. Different chocolate types were used, such as traditional milk chocolate, dark chocolate and a white chocolate type.

During continuous production the drying device 28 keeps the environment in the housing 21 dry. By keeping the dewpoint temperature of the air blown into the housing and surrounding at least the pressing surfaces (27) below the temperature of the pressing surfaces (27) in every position of the plungers (24) the pressing surfaces 27 are kept free from any development of moisture. The surfaces 27 are also kept free from lubricant in the continuous production.

The skilled person controls the unit 28 so that the air is sufficiently dried regardless of the composition of the air and the pressing surface temperature - so that no moisture is created on the pressing surface in any position of the plunger.

The individual units depositing, moulding etc may follow the conveyor when in engagement with the individual mould plate or the conveyor may be stopped for a moment.

It has become possible to produce a bottom covering chocolate layer having the same high gloss and nice geometry as the other surfaces of a chocolate article. The pressing surface may comprise a company logo or a product brand which is printed into the covering layer by the pressing action of the plunger. When the consumer then opens the wrapping of the chocolate article, which is practically always done at the bottom thereof, the first surface visible to the consumer is the nice bottom with the pressed covering layer having the identical print of the pressing surface with a company name or brand. A major gain to the chocolate manufacturer.

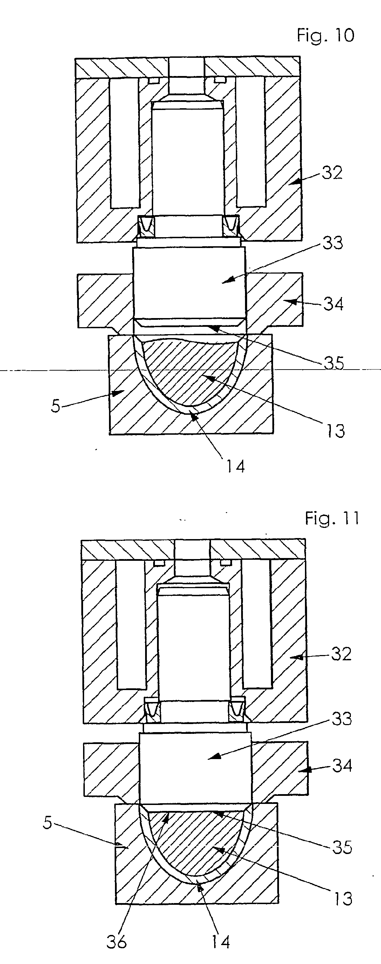

The centre filling station 2 may comprise a further holding device constructed in the same manner as the holding device 23 of the pressing plungers 24. As schematically depicted in figure 10 a secondary holding device 32 carries plungers 33 and an optional closure plate 34. The pressure surface 35 is kept dry without any applied lubricant and the temperature of the pressing surface 35 is kept below the solidification temperature of the centre mass, which is essentially fat-containing. When the temperature of the pressing surfaces 35 is colder than 0°C an especially stable upper layer or surface 36 of the centre mass is created. After the plungers 33 have been retracted the chocolate bottom covering layer 19 is deposited upon a completely even upper surface 36 of the centre filling mass 13 whereby the covering layer can be moulded with the desired even thickness aii over the centre mass.

## Claims

1. Apparatus (3) for covering pre-made edible articles (20) in moulds (15) with a layer (19) of chocolate-like mass, in particular chocolate mass, **characterised in, that** it comprises plungers (24) having a pressing surface (27) free of any lubricant to be immersed into the covering layers (19) of tempered chocolate mass thereby being pressed into shape by the influence of the non-lubricated plunger surfaces (27), and that the apparatus is adapted to keep the temperature of the pressing surfaces (27) below the solidification temperature of the chocolate mass during the pressing thereof, that the pressing surfaces (27) are planar, and that the apparatus comprises a depositor (17), which is adapted to deposit different chocolate types (A, B, C) into the different mould cavities (15) of the same mould plate (5), so that covering layers (19) of different chocolate types (A, B, C) are created in the same mould plate (5).

2. Apparatus according to claim 1, **characterised in, that** the apparatus (3) comprises a housing (21) wherein the plungers (24) are arranged.

3. Apparatus according to claim 2, **characterised in, that** the apparatus (3) comprises an air drying unit (28), which is adapted to blow dry air into the housing (21) around the pressing surfaces (27) in every position thereof.

4. Apparatus according to claim 1, **characterised in, that** the pressing surfaces (27) comprise a highly polished metal surface.

5. Apparatus according to claim 1. **characterised in, that** the plungers (24) are carried by a holding device (23) having cooling channels (28) through which cooling liquid flow.

6. Apparatus according to claim 1, **characterised in, that** the plungers (24) are arranged to move independently of each other in the holding device (23) when immersed into the chocolate mass.

7. Apparatus according to claim 1, **characterised in, that** the apparatus comprises a closure plate (29), which is movable in relation to the plungers (24) and which is adapted to engage with the upper surface (30) of the mould plate (5) at least in areas surrounding the mould cavities (15).

8. Apparatus according to claim 1, **characterised in, that** the apparatus comprises further plungers (33), which are adapted to press the top of the centre mass (13) in the pre-made articles before the articles are covered by the chocolate mass.

## Patentansprüche

1. Vorrichtung (3) zur Bedeckung vorgefertigter, essbarer Waren (20) in Formen mit einer Schicht (29) aus schokoladenartiger Masse, insbesondere Schokoladenmasse, **dadurch gekennzeichnet dass** sie Presskolben (24) mit Pressflächen (27) ohne Schmiermittel umfasst, die in die Deckschichten (19) aus temperierter Schokolade zu tauchen sind, um **dadurch** unter Einwirken der nicht geschmierten Presskolbenoberflächen (27) in Form gepresst zu werden, dass die Vorrichtung so ausgestaltet ist, dass die Temperatur der Pressflächen (27) unter der Erstarrungstemperatur der temperierten Schokoladenmasse während des Pressens davon gehalten wird, dass die Pressflächen (27) eben sind und dass die Vorrichtung eine Ausgabeeinrichtung (17) umfasst, die so ausgestaltet ist, dass verschiedene Schokoladensorten (A, B, C) in die verschiedenen formgebenden Aushöhlungen (15) derselben Formplatte (5) ausgegeben werden, so dass Deckschichten (19) aus verschiedenen Schokoladensorten (A, B, C) in derselben Formplatte (5) geschaffen werden.

2. Vorrichtung gemäß Anspruch 1, **dadurch gekennzeichnet, dass** die Vorrichtung (3) ein Gehäuse (21) aufweist, in dem die Presskolben (24) angeordnet sind.

3. Vorrichtung gemäß Anspruch 1, **dadurch gekennzeichnet, dass** die Vorrichtung (3) ein Lufttrocknungsgerät (28) aufweist, das so ausgestaltet ist, dass es trockene Luft in das Gehäuse (21) um die Pressflächen (27) in jeder deren Stellung bläst.

4. Vorrichtung gemäß Anspruch 1, **dadurch gekennzeichnet, dass** die Pressflächen (27) eine auf Hochglanz polierte Metalloberfläche aufweisen.

5. Vorrichtung gemäß Anspruch 1, **dadurch gekennzeichnet, dass** die Presskolben (24) durch ein Haltegerät (23) mit Kühlkanälen (28), durch die Kühlflüssigkeit zirkuliert, gestützt werden.

6. Vorrichtung gemäß Anspruch 1, **dadurch gekennzeichnet, dass** die Presskolben (24) so angeordnet sind, dass sie sich unabhängig voneinander im Haltegerät (23) bewegen, wenn sie in die Schokoladenmasse getaucht sind.

7. Vorrichtung gemäß Anspruch 1, **dadurch gekennzeichnet, dass** die Vorrichtung eine Verschlussplatte (29) aufweist, die bezüglich der Presskölben (24) beweglich ist und die so ausgestaltet ist, dass sie mit der oberen Fläche (30) der Formplatte (5) wenigstens in Breichen um die formgebenden Aushöhlungen (15) in Eingriff steht.

8. Vorrichtung gemäß Anspruch 1, **dadurch gekennzeichnet, dass** die Vorrichtung weitere Presskolben (33) umfasst, die so ausgestaltet sind, dass sie von oben auf die Zentralmasse (13) in den vorgefertigten Waren pressen, bevor die Waren durch die Schokoladenmasse bedeckt werden.

## Revendications

1. Dispositif (3) pour couvrir les articles (20) comestible fabriqués d'avance dans les moules (15) d'une couche (19) de masse du type chocolat, en particulier de la masse de chocolat, **caractérisé en ce qu'**il comprend des plongeurs (24) ayant des surfaces (27) de pression sur lesquelles aucun lubrifiant n'est appliqué qui sont submergés dans les couvertures (19) de masse de chocolat tempéré, le chocolat étant ainsi pressé en forme par l'influence des surfaces (27) de plongeurs non-lubrifiées, et **en ce que** le dispositif est adapté à maintenir la température des surfaces (27) de pression au-dessous de la température de solidification de la masse de chocolat tempéré pendant la pression, et **en ce que** les surfaces (27) de pression sont planes et **en ce que** le dispositif comprend une couleuse (17) adaptée à couler des types de chocolat différents (A, B, C) dans les cavités (15) de moules diverses de la même plaque (5) de moule, de sorte que les couvertures (19) des types de chocolat différents (A, B, C) sont crées dans la même plaque (5) de moule.

2. Dispositif selon la revendication 1, **caractérisé en ce que** le dispositif (3) comprend un logement (21) dans lequel les plongeurs (24) sont arrangés.

3. Dispositif selon la revendication 2, **caractérisé en ce que** le dispositif (3) comprend un dispositif de séchage à l'air (28) qui est adapté à souffler de l'air sec dans le logement (21) autour des surfaces (27) de pression en chaque position d'elles.

4. Dispositif selon la revendication 1, **caractérisé en ce que** les surfaces (27) de pression comprennent une surface de métal parfaitement lisse et brillante.

5. Dispositif selon la revendication 1, **caractérisé en ce que** les plongeurs (24) sont tenus par un dispositif de support (23) ayant des tunnels de froid (28) à travers lesquels un agent de refroidissement liquide écoule.

6. Dispositif selon la revendication 1, **caractérisé en ce que** les plongeurs (24) sont arrangés en vue de marcher indépendamment de l'un de l'autre dans le dispositif de support (23) quand ils sont submergés dans la masse de chocolat.

7. Dispositif selon la revendication 1, **caractérisé en ce que** le dispositif comprend une plaque (29) de fermeture qui est mobile en relation des plongeurs (24) et qui est adaptée à embrayer avec la surface supérieure (30) de la plaque de moule (5) au moins aux endroits autours des cavités (15) de moules.

8. Dispositif selon la revendication 1, **caractérisé en ce que** le dispositif comprend des plongeurs (33) supplémentaires qui sont adaptés à presser le haut de la masse (13) de centre dans les articles fabriqués d'avance avant que les articles soient couverts par la masse de chocolat.
